Europäisches Patentamt

European Patent Office

Office européen des brevets

(11) Veröffentlichungsnummer: **0 349 737**
**A2**

# (12) EUROPÄISCHE PATENTANMELDUNG

(21) Anmeldenummer: 89108665.4

(22) Anmeldetag: 13.05.89

(51) Int. Cl.4: **F23N 1/00**

(30) Priorität: 06.07.88 DE 3822899

(43) Veröffentlichungstag der Anmeldung:
10.01.90 Patentblatt 90/02

(84) Benannte Vertragsstaaten:
DE FR GB SE

(71) Anmelder: **Webasto AG Fahrzeugtechnik**
**Kraillingerstrasse 5**
**D-8035 Stockdorf(DE)**

(72) Erfinder: **Widemann, Friedrich**
**Siegmannstrasse 14**
**D-8000 München 60(DE)**
Erfinder: **Bleeker, Jochen**
**Grubmühler Feldstrasse 15c**
**D-8035 Gauting(DE)**

(54) **Verfahren zum Betreiben eines Heizgeräts und Heizgerät.**

(57) Es wird ein Verfahren zum Betreiben eines Heizgeräts angegeben, das in wenigstens zwei Laststufen betreibbar ist, wobei die Auslegung derart getroffen ist, daß der Brennbetrieb des Heizgeräts immer in der niedrigeren oder niedrigsten Laststufe begonnen wird. Die Steuereinrichtung des Heizgeräts ist hierbei so ausgelegt, daß das Heizgerät immer in der niedrigeren oder der niedrigsten Laststufe oder Heizleistungsstufe gestartet wird. Die Steuereinrichtung schaltet das Heizgerät in die höhere oder höchste Laststufe, wenn das Heizgerät beim Start zuerst in der niedrigen oder niedrigsten Laststufe betrieben worden ist. Zweckmäßigerweise enthält die Steuereinrichtung eine Triggerschaltung für eine Schaltschwelle, bei deren Unterschreitung eine Umschaltung auf die höhere Laststufe erfolgt.

FIG. 1

EP 0 349 737 A2

## Verfahren zum Betreiben eines Heizgeräts und Heizgerät

Die Erfindung befaßt sich mit einem Verfahren zum Betreiben eines Heizgeräts, insbesondere Fahrzeug-Heizgeräts, das in wenigstens zwei Laststufen betreibbar ist, sowie mit einem Heizgerät, das eine Steuereinrichtung hat, das einen Betrieb in wenigstens zwei Laststufen, einem Vollastbetriebszustand und einem Teillastbetriebszustand, gestattet.

Insbesondere bei mit flüssigem Wärmeträger arbeitenden Heizgeräten, die beispielsweise in den flüssigen Wärmeträgerkreislauf einer Brennkraftmaschine eines Fahrzeugs eingebunden werden und die klein ausgelegt sind, haben sich Schwierigkeiten im Hinblick auf die Abgabe der vom Heizgerät im Brennbetrieb erzeugten Wärme zu solchen Kreisläufen ergeben, die ein geringes Wärmeaufnahmevermögen haben. Wenn derartige Heizgeräte so betrieben werden, daß üblicherweise der Betrieb in der höheren bzw. höchsten Laststufe aufgenommen wird, so kann es zu Überlastungen, insbesondere zum Auslösen einer Temperatursicherung des Heizgeräts kommen.

Die Erfindung zielt daher darauf ab, unter Überwindung der zuvor geschilderten Schwierigkeiten, ein Verfahren zum Betreiben eines Heizgeräts, insbesondere Fahrzeug-Heizgeräts sowie ein Heizgerät der gattungsgemäßen Art bereitzustellen, die ein zuverlässiges Arbeiten eines solchen Heizgeräts auch bei geringem Wärmebedarf sicherstellen.

Erfindungsgemäß zeichnet sich ein Verfahren zum Betreiben eines Heizgeräts, insbesondere Fahrzeug-Heizgeräts, das in wenigstens zwei Laststufen betreibbar ist, dadurch aus, daß der Brennbetrieb des Heizgeräts immer in der niedrigeren oder niedrigsten Laststufe begonnen wird. Bei einem solchen Betreiben des Heizgeräts wird somit nach dem Starten nicht die maximal mögliche Wärme, sondern nur die minimal mögliche Wärmemenge erzeugt, um auch in kritischen Fällen die erzeugte Wärme in ausreichendem Maße vom Heizgerät abführen zu können. Hierdurch lassen sich Betriebsstörungen, beispielsweise bedingt durch Auslösen einer Temperatursicherung, vermeiden.

Wenn das Heizgerät nicht im Regelbetrieb arbeitet, sondern beispielsweise beim Erststart in Betrieb gesetzt wird, so ist das Verfahren nach der Erfindung zweckmäßigerweise derart ausgelegt, daß nach der Flammbildung im Heizgerät, die beispielsweise mit Hilfe eines Flammwächters erfaßt wird, und/oder eine Umschaltung auf die höhere Laststufe bzw. die höchste Laststufe erfolgt, um die mit dem Heizgerät erzeugte Wärmemenge für eine zügige Aufheizung insbesondere des Fahrgastinnenraums eines Fahrzeugs, zu steigern.

Wenn das Heizgerät hingegen im Regelbetrieb arbeitet, bei dem eine Umschaltung zwischen den Laststufen, wie Vollast, Teillast, Aus, vorgenommen wird, so ist die Verfahrensführung derart gewählt, daß eine Umschaltung auf die höhere Laststufe nur dann erfolgt, wenn nach Ablauf einer festgelegten oder variablen Wartezeit der Wärmebedarf zwischenzeitlich angestiegen ist. Somit wird im Regelbetrieb des Heizgeräts eine wärmebedarfabhängige Regelung sichergestellt, so daß die zwangsläufige Umschaltung auf die höhere oder höchste Laststufe nur beim Erststart des Heizgeräts vorgenommen wird. Für eine derartige Verfahrensweise wird zweckmäßigerweise eine Schaltschwelle für den Wärmebedarf vorgegeben, bei dessen Unterschreitung eine Umschaltung auf die höhere bzw. höchste Laststufe erfolgt.

Ferner zeichnet sich ein Heizgerät, insbesondere Fahrzeug-Heizgerät, mit einer Steuereinrichtung für das Betreiben des Heizgeräts in wenigstens zwei Laststufen dadurch aus, daß die Steuereinrichtung derart ausgelegt ist, daß die Aufnahme des Brennbetriebs des Heizgeräts immer in der niedrigeren oder niedrigsten Laststufe erfolgt.

Bei einer derartigen Auslegung des Heizgeräts lassen sich lange Heizzeiten auch bei geringem Wärmebedarf sicherstellen, um ein Auslösen der Temperatursicherung bei einem derartigen Heizgerät zu vermeiden, das insbesondere dann auftreten kann, wenn es sich um kleine mit flüssigem Wärmeträger betriebene Heizgeräte handelt, die in Kreisläufe mit geringer Wärmekapazität eingebunden sind. Durch diese Auslegung des Heizgeräts beim Einschalten und Starten des Heizgeräts wird zu Beginn lediglich die minimal mögliche Wärmemenge erzeugt, die meist wirksam in den Kreislauf abgegeben werden kann.

Gemäß einer bevorzugten Auslegungsform des Heizgeräts ist in der Steuereinrichtung desselben eine Triggereinrichtung für eine Schaltschwelle enthalten, so daß im Falle des Regelbetriebs des Heizgeräts eine wärmebedarfsabhängige Umschaltung von der niedrigsten Laststufe nach dem Start zu einer höheren oder höchsten Laststufe ermöglicht wird. Zweckmäßigerweise ist die Schaltschwelle der Triggereinrichtung so gewählt, daß bei deren Unterschreitung eine Umschaltung auf die höhere oder höchste Laststufe erfolgt.

Die Erfindung wird nachstehend an einem Beispiel unter Bezugnahme auf die beigefügte Zeichnung näher erläutert. Darin zeigt:

Fig. 1 ein schematisches Zeitdiagramm zur Verdeutlichung der Schaltablauffolge eines Heizgeräts,

Fig. 2 ein Flußdiagramm zur Verdeutlichung des Ablaufs des Betriebsverfahrens eines Heizgeräts nach der Erfindung, und

Fig. 3 ein schematisches Schaltbild einer Steuereinrichtung für ein Heizgerät nach der Erfindung.

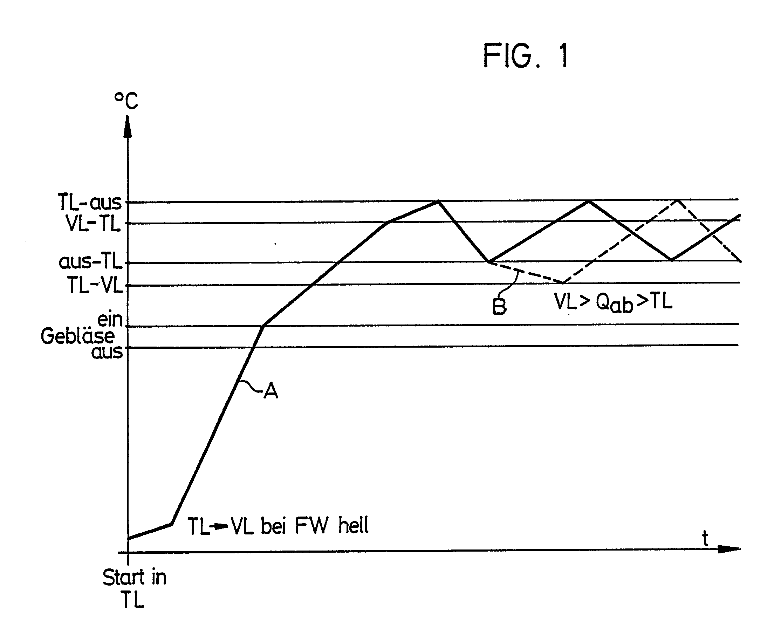

Anhand von Fig. 1 wird eine Schaltablauffolge des Verfahrens zum Betreiben eines Heizgeräts nach der Erfindung erläutert, wobei auf der Abszisse die Zeit t und auf der Ordinate die Temperatur und hiervon abhängige Schaltstufen aufgetragen sind. Als Schaltstufen sind, ausgehend vom Ordinatenursprung eine Schaltstufe für Gebläse EIN oder AUS, eine Schaltstufe für die Umschaltung von Teillast TL auf Vollast VL, eine Schaltstufe für die Umschaltung von Vollast VL auf Teillast TL und eine Schaltschwelle für Teillast TL-AUS und aus Teillast TL als Beispiele zur Verdeutlichung eines schematischen Verfahrensablaufes angegeben.

Die in Fig. 1 in durchgezogenen Linien eingetragene Kurve A bezieht sich auf den Verfahrensablauf, wenn die im Heizkreislauf abgeführte Wärmemenge $Q_{ab}$ kleiner als die im Teillastbetrieb TL erzeugte Heizleistung ist, d.h. für die Kurve A gilt $Q_{ab} < {}_{TL}$. Wie gezeigt, wird beim Verfahren zum Betreiben des Heizgeräts nach der Erfindung beim Starten des Heizgeräts auf den Teillastbetrieb TL geschaltet. Wenn ein Flammwächter FW ein Signal abgibt, das angibt, daß im Heizgerät eine Flamme erzeugt wurde und sich diese stabilisiert hat, so erfolgt eine Umschaltung vom Teillastbetrieb TL auf den Vollastbetrieb VL. Nach Ablauf einer Wartezeit, die fest vorgegeben oder variabel sein kann, und die dazu dient, daß sichergestellt wird, daß sich die Flamme im Heizgerät stabilisiert hat, wird dann das Gebläse, d.h. das Heizgebläse, eingeschaltet. Da die im Heizkreislauf abgeführte Wärmemenge $Q_{ab}$ kleiner als die im Teillastbetrieb erzeugte Heizleistung des Heizgeräts ist, erfolgt dann beim Verfahrensablauf eine Umschaltung von dem Vollastbetrieb VL auf den Teillastbetrieb TL. Bei Erreichen der Schaltschwelle TL-aus wird dann das Heizgerät aus dem Teillastbetrieb abgeschaltet. Wenn die Temperatur um einen vorbestimmten Temperaturbereich von beispielsweise 10°C im Wärmeträgerkreislauf gesunken ist, wird der Punkt an der unteren Grenze der Schaltschwelle aus-TL erreicht, und nach Ablauf einer Regelpause wird bei dem Kurvenzug A dann wiederum mit dem Heizgerät Heizleistung im Teillastbetrieb TL erzeugt, bis der höhere Temperaturwert der Schaltschwelle TL-aus erreicht ist. Diese Schaltfolge wird dann in dem vorstehend beschriebenen Wechsel wiederholt.

Mit gebrochener Linie ist eine Kurve B eingetragen, die durchlaufen wird, wenn nach der Abschaltung des Heizgeräts aus dem Teillastbetrieb TL festgestellt wird, daß nunmehr ein zusätzlicher Wärmebedarf vorhanden ist. Diese in gebrochener Linie dargestellte Kurve B bezieht sich somit auf den Fall, daß die im Vollastbetrieb VL erzeugte Heizleistung größer als die im Wärmeträgerkreislauf abgeführte Wärmemenge $Q_{ab}$ und diese wiederum größer als die im Teillastbetrieb TL erzeugte Heizleistung ist, d.h. es gilt Folgendes:

$$VL > Q_{ab} > TL$$

In diesem Fall fällt die Temperatur im Wärmeträgerkreislauf ausgehend von der Schaltschwelle für den Teillastbetrieb ausTL weiter ab, und das Heizgerät wird dann so betrieben, daß eine Umschaltung von der Teillaststufe TL auf die Vollaststufe VL erfolgt. Nach Ablauf einer vorbestimmten Zeit, wenn das Heizgerät zügig im Vollastbetrieb eine vorbestimmte Heizleistung geliefert hat, erfolgt dann eine Umschaltung vom Vollastbetrieb VL auf den Teillastbetrieb TL, und nach Absinken der Temperatur des Wärmeträgerkreislaufes, ebenfalls beispielsweise um mit 10°C erfolgt dann wieder eine Umschaltung vom Teillastbetrieb TL auf den Vollastbetrieb VL, usw.

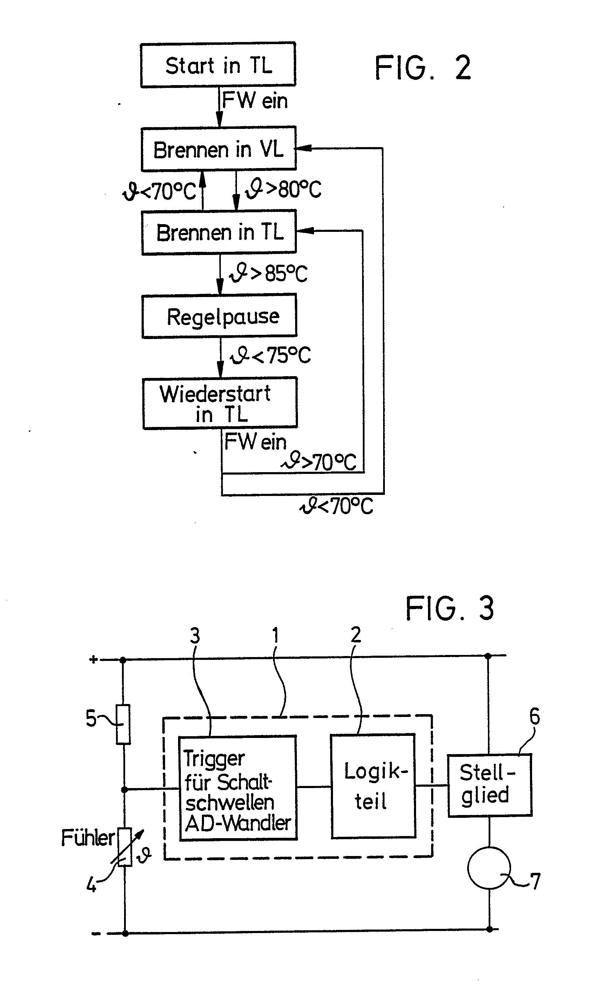

Im Flußdiagramm nach Fig. 2 ist unter Angabe von beispielhaft gewählten Temperaturen im Wärmeträgerkreislauf der Verfahrensablauf zum Betreiben des Heizgeräts nach der Erfindung schematisiert dargestellt. Wie hieraus zu ersehen ist, erfolgt beim erfindungsgemäßen Verfahren das Starten des Heizgeräts immer im Teillastbetrieb TL und auch nach Ablauf der Regelpause erfolgt ein Wiederstart im Teillastbetrieb TL. Durch diese Verfahrensführung können thermische Belastungen des Heizgeräts beim Starten und nach der Regelpause vermieden werden, wobei die Auslegung ferner derart getroffen ist, daß dann, wenn ein relativ großer Wärmebedarf besteht, relativ schnell eine Umschaltung auf die nächst höhere bzw. die höchste Laststufe, den Vollastbetrieb VL vorgenommen wird, so daß in relativ kurzer Zeit nach dem Start des Heizgeräts ausgehend vom Teillastbetrieb TL die größtmögliche Heizleistung im Vollastbetrieb VL erzeugt wird und somit beispielsweise der Fahrgastinnenraum eines Fahrzeuges schnell aufgeheizt wird, wenn das nach der Erfindung betriebene Heizgerät ein Fahrzeugheizgerät ist.

Anhand von Fig. 3 wird ein Beispiel einer Schaltung für eine Steuereinrichtung des Heizgeräts gezeigt. Die Steuereinrichtung ist insgesamt mit 1 bezeichnet. Sie umfaßt wie dargestellt einen Logikteil 2 und eine Triggerschaltung 3, die für die Schaltschwellen bestimmt ist und die einen Analog/Digital (A/D)-Wandler enthält. Als Führungsgröße bei dem dargestellten Beispiel dient die Temperatur des Wärmeträgers, beispielsweise die Wassertemperatur bei einem flüssigen Wärmeträger, wenn es sich bei dem Heizgerät um ein sogenanntes Wasserheizgerät handelt. Für die Erfassung der Wassertemperatur $\theta$ ist ein Temperaturfühler 4 vorgesehen, dessen Ausgang an dem Eingang der Triggerschaltung 3 unter Zwischenschaltung des A/D-Wandlers anliegt. Über den Logikteil 2 werden dann die Abfragen bezüglich der Schaltschwellen ausgeführt. In Abhängigkeit von den ermittelten Abfrageergebnissen steuert dann die Steuereinrichtung 1 das nicht näher dargestellte Heizgerät auf die vorstehend beschriebene Verfahrensweise. Mit 5 ist in Fig. 3 ein Vorschaltwiderstand auf den Temperaturfühler 4 gezeigt, der zwischen dem positiven Pol und dem Knotenpunkt zwischen dem Ausgang des Temperaturfühlers 4 und dem Eingang der Triggerschaltung 3 angeordnet ist. Der Ausgang der Steuereinrichtung 1 liegt an einem Stellglied 6 an, über das beispielsweise die Ansteuerung eines Brennluftgebläsemotors 7 erfolgt.

Bei der Auslegung des Verfahrens zum Betreiben des Heizgeräts nach der Erfindung sowie bei dem erfindungsgemäß ausgelegten Heizgerät ist die Auslegung derart getroffen, daß das Heizgerät immer im Teillastbetrieb TL gestartet wird, und daß eine weitere Temperaturschwelle im Verfahrensablauf eingeführt wird, die eine Umschaltung vom Teillastbetrieb TL auf den Vollastbetrieb VL ermöglicht, wenn diese Schaltschwelle unterschritten wird, da zwischenzeitlich sich ein höherer Wärmebedarf im Wärmeträgerkreislauf ergeben hat.

Selbstverständlich ist die Erfindung nicht auf das vorangehend erläuterte Beispiel beschränkt, sondern anstelle der dort beschriebenen beiden Lastzustände, wie Teillast TL und Vollast VL, können natürlich auch mehr Heizleistungsstufen gegebenenfalls verwirklicht werden, wobei dann die Auslegung derart getroffen wird, daß das Starten des Heizgeräts immer in der niedrigeren Heizleistungsstufe oder der niedrigsten Heizleistungsstufe erfolgt und dann gegebenenfalls eine Umschaltung auf die nächste höhere Heizleistungsstufe vorgenommen wird.

## Bezugszeichen

1 Steuereinrichtung insgesamt
2 Logikteil
3 Triggerschaltung
4 Temperaturfühler
5 Widerstand
6 Stellglied
7 Brennluftgebläsemotor
t Zeit
Temperatur des Wärmeträgers,(wie Wasser in °C)
    TL Teillastbetrieb
    VL Vollastbetrieb
    $Q_{ab}$ im Wärmeträgerkreislauf abgeführte Wärmemenge
    FW Flammwächter

A Kurve für $Q_{ab} < TL$
B Kurve für $VL > Q_{ab}\ TL$

## Ansprüche

1. Verfahren zum Betreiben eines Heizgeräts, insbesondere Fahrzeug-Heizgeräts, das in wenigstens zwei Laststufen betreibbar ist, dadurch **gekennzeichnet,** daß der Brennbetrieb des Heizgeräts immer in der niedrigeren oder niedrigsten Laststufe begonnen wird.

2. Verfahren nach Anspruch 1, dadurch gekennzeichnet, daß beim Start nach der Flammbildung im Heizgerät, beim Start nach Umschalten der Flammüberwachung oder nach Ablauf einer festen oder variablen Stabilisierungszeit bzw. nach Umschalten einer Flammüberwachung und/oder nach Ablauf einer festgelegten oder variablen Wartezeit auf die höhere Laststufe umgeschaltet wird.

3. Verfahren nach Anspruch 1 oder 2, dadurch gekennzeichnet, daß nach einer Regelpause im Brennbetrieb eine Umschaltung auf die höhere Laststufe nur dann erfolgt, wenn der Wärmebedarf nach dem Wiederstart nach der Regelpause zwischenzeitlich gestiegen ist.

4. Verfahren nach Anspruch 3, dadurch gekennzeichnet, daß eine Schaltschwelle für den Wärmebedarf vorgesehen ist, bei dessen Unterschreitung eine Umschaltung auf die höhere Laststufe erfolgt.

5. Heizgerät, insbesondere Fahrzeug-Heizgerät, mit einer Steuereinrichtung zum Betreiben des Heizgeräts in wenigstens zwei Laststufen, dadurch gekennzeichnet, daß die Steuereinrichtung (1) derart ausgebildet ist, daß der Brennbetrieb beim Starten des Heizgeräts immer in der niedrigeren oder niedrigsten Laststufe erfolgt.

6. Heizgerät nach Anspruch 5, dadurch gekennzeichnet, daß die Steuereinrichtung (1) das Heizgerät in die höhere Laststufe schaltet, wenn das Heizgerät beim Start zuerst in der niedrigeren oder niedrigsten Laststufe betrieben worden ist.

7. Heizgerät nach Anspruch 5 oder 6, dadurch gekennzeichnet, daß die Steuereinrichtung (1) eine Triggerschaltung (3) für eine Schaltschwelle enthält, bei deren Unterschreitung eine Umschaltung auf die höhere Laststufe erfolgt.

# FIG. 1

FIG. 2

```
┌─────────────────┐
│   Start in TL   │
└────────┬────────┘
         │ FW ein
         ▼
┌─────────────────┐◄──────────────┐
│  Brennen in VL  │               │
└─────────────────┘               │
   ϑ<70°C ▲│ ϑ>80°C               │
         │▼                       │
┌─────────────────┐◄──────────┐   │
│  Brennen in TL  │           │   │
└────────┬────────┘           │   │
         │ ϑ>85°C             │   │
         ▼                    │   │
┌─────────────────┐           │   │
│   Regelpause    │           │   │
└────────┬────────┘           │   │
         │ ϑ<75°C             │   │
         ▼                    │   │
┌─────────────────┐           │   │
│   Wiederstart   │           │   │
│      in TL      │           │   │
└─────────────────┘           │   │
     FW ein                   │   │
              ϑ>70°C ─────────┘   │
                                  │
     ϑ<70°C ──────────────────────┘
```

FIG. 3